# EUROPÄISCHE PATENTSCHRIFT

(11) **EP 2 306 073 B1**
(45) Veröffentlichungstag und Bekanntmachung des Hinweises auf die Patenterteilung: **05.04.2017**
(21) Anmeldenummer: 10009873.0
(22) Anmeldetag: 18.09.2010
(51) Int. Cl.: F21S 8/12, F21V 5/00, F21S 8/10

(54) **Lichtmodul für eine Beleuchtungseinrichtung eines Kraftfahrzeugs**
Light module for a lighting device of a motor vehicle
Module d'éclairage pour un dispositif d'éclairage d'un véhicule automobile

(30) Priorität: 05.10.2009 DE 102009049558; 17.11.2009 DE 102009053581
(43) Veröffentlichungstag der Anmeldung: 06.04.2011
(73) Patentinhaber: Automotive Lighting Reutlingen GmbH, 72762 Reutlingen (DE)
(72) Erfinder: Stefanov, Emil P., Dr.-Ing., 72762 Reutlingen (DE)
(74) Vertreter: DREISS Patentanwälte PartG mbB

(56) Entgegenhaltungen:
- EP-A1- 0 171 646
- EP-A1- 1 903 274
- EP-A2- 1 818 600
- DE-A1- 4 031 352
- DE-A1-102008 013 603
- DE-U1-202007 001 829
- JP-A- 2008 226 542
- US-A- 4 733 335
- US-A1- 2006 087 861
- US-A1- 2008 198 574

## Beschreibung

Die vorliegende Erfindung betrifft ein Lichtmodul für eine Beleuchtungseinrichtung eines Kraftfahrzeugs. Das Lichtmodul hat mehrere matrixartig angeordnete Halbleiterlichtquellen, die elektromagnetische Strahlung emittieren. Im Strahlengang der Halbleiterlichtquellen ist eine Primäroptik angeordnet, die als ein Optikarray mit mehreren matrixartig angeordneten optisch wirksamen Elementen ausgestaltet ist und die von den Halbleiterlichtquellen ausgesandten Strahlen bündelt. Im weiteren Verlauf des Strahlengangs ist eine Sekundäroptik angeordnet, welche die Lichtverteilung am Austritt der Primäroptik zur Erzielung einer gewünschten Lichtverteilung auf einer Fahrbahn vor dem Kraftfahrzeug abbildet. Dabei weist die Primäroptik neben den optisch wirksamen Elementen im Strahlengang nach diesen angeordnet zusätzlich optisch wirksame Austrittsoptiken auf.

Ein Lichtmodul der eingangs genannten Art ist bspw. aus der EP 1 780 462 A1 und der DE 10 2008 013 603 A1 bekannt. Darüber hinaus ist aus der US 4,733,335 ein Lichtmodul bekannt, das Ähnlichkeit zu dem Lichtmodul der eingangs genannten Art hat, wobei allerdings die Primäroptik keine im Strahlengang nach diesen angeordnete zusätzliche optisch wirksame Austrittsoptiken aufweist.

Aus dem Stand der Technik sind verschiedenartige Beleuchtungseinrichtungen für Fahrzeuge bekannt. So unterscheidet man zunächst zwischen Scheinwerfern und Leuchten. Scheinwerfer sind ausschließlich im Frontbereich eines Fahrzeugs angeordnet. Sie dienen neben der Verkehrssicherheit durch eine Sichtbarmachung des Fahrzeugs für andere Verkehrsteilnehmer insbesondere der Ausleuchtung der Fahrbahn vor dem Fahrzeug, um die Sicht für den Fahrer zu verbessern. Scheinwerfer erzeugen Abblendlicht-, Fernlicht- oder beliebig andere Lichtfunktionen wie bspw. Nebellicht, Kurvenlicht, Stadtlicht, Autobahnlicht, etc. Ein Scheinwerfer kann eine oder mehrere dieser Lichtfunktionen erzeugen. Scheinwerfer können als Lichtquelle eine oder mehrere Glühlampen, Gasentladungslampen oder Halbleiterlichtquellen (Leuchtdioden) aufweisen. Scheinwerfer erzeugen üblicherweise für das menschliche Auge sichtbares Licht. Es ist aber auch denkbar, dass Scheinwerfer bspw. für ein Nachtsichtgerät unsichtbare Strahlung, bspw. InfrarotStrahlung, erzeugen, welche einen Fernlichtbereich vor dem Fahrzeug ausleuchtet ohne entgegenkommende Verkehrsteilnehmer zu blenden. Durch eine infrarotempfindliche Kamera wird der ausgeleuchtete Fahrbahnbereich erfasst und das erfasste Bild dem Fahrer auf einem Bildschirm, projiziert auf die Windschutzscheibe oder auf andere Weise präsentiert. Scheinwerfer können nach dem Reflexionsprinzip arbeiten, das heißt von der Lichtquelle ausgesandtes Licht wird von einem Reflektor zur Erzeugung der gewünschten Lichtverteilung auf die Fahrbahn reflektiert, oder aber nach dem Projektionsprinzip, wobei eine Lichtverteilung im Scheinwerferinneren zur Erzeugung der gewünschten Lichtverteilung von einer Projektions- bzw. Sammellinse auf der Fahrbahn abgebildet wird.

Leuchten dienen überwiegend der Verkehrssicherheit durch Sichtbarmachung des Fahrzeugs für andere Verkehrsteilnehmer. So werden Bugleuchten im Frontbereich des Fahrzeugs bspw. als Positionslicht, Blinklicht oder Tagfahrlicht und Heckleuchten im Heckbereich des Fahrzeugs bspw. als Bremslicht, Schlusslicht, Blinklicht, Nebelschlusslicht, Positionslicht oder Rückfahrlicht eingesetzt. Die Bugleuchten können dabei im Scheinwerfer integriert sein, sie können aber auch zusätzlich zum Scheinwerfer als separate Leuchten ausgebildet sein. Außerdem gibt es bspw. in den USA seitlich am Fahrzeug angeordnete Leuchten, sog. Sidemarker. Die Leuchten können zur Realisierung einer oder mehrerer Lichtfunktionen ausgebildet sein. Als Lichtquellen weisen Leuchten üblicherweise Glühlampen oder Halbleiterlichtquellen auf. Sie arbeiten in der Regel nach dem Reflexionsprinzip. Im Fall von Halbleiterlichtquellen werden bevorzugt zusätzlich zu oder anstelle von Reflektoren totalreflektierende Vorsatzoptiken zur Bündelung der Lichtstrahlen eingesetzt.

Aus der DE 103 14 524 A1 ist ein Scheinwerfer mit mehreren matrixartig angeordneten Halbleiterlichtquellen bekannt, die elektromagnetische Strahlung in Form von für das menschliche Auge sichtbarem Licht emittieren. Dabei ist jeder Halbleiterlichtquelle ein Primäroptikelement zugeordnet, so dass die Gesamtheit der Primäroptikelemente ein Optikarray bildet. Die Primäroptikelemente dienen zum Bündeln des von der Lichtquelle ausgesandten Lichts. Sie sind als Lichtleiter mit totalreflektierenden Eigenschaften ausgebildet. Jedes Primäroptikelement weist eine Lichteingangsfläche und eine Lichtausgangsfläche auf. In den Primäroptikelementen werden die durch die Lichteingangsfläche einfallenden Lichtstahlen mindestens einmal totalreflektiert und dadurch gebündelt. Anschließend verlassen sie die Optikelement durch die Lichtausgangsfläche und werden durch eine Sekundäroptik (z.B. eine Projektionslinse) aus dem Scheinwerfer abgestrahlt. Mehrere Lichtausgangsflächen des Optikarrays sind zu Gruppen zusammengefasst, wobei eine Gruppe oder mehrere zusammengeschaltete Gruppen jeweils eine gewünschte Abstrahlcharakteristik des Scheinwerfers erzielen. Außerdem können einzelne Halbleiterlichtquellen unabhängig von anderen in Betrieb genommen werden.

Die von der bekannten Beleuchtungseinrichtung erzeugte Lichtverteilung setzt sich also aus mehreren in vertikaler und/oder horizontaler Richtung nebeneinander angeordneten Abbildungen der Halbleiterlichtquellen zusammen. Abstände zwischen den Halbleiterlichtquellen, bzw. zwischen den Lichtausgangsflächen der Primäroptikelemente führen dabei zwangsläufig zu dunkleren linienförmigen Bereichen zwischen den Abbildungen der einzelnen Halbleiterlichtquellen. Die linienförmigen Bereiche führen zu Inhomogenitäten der resultierenden Lichtverteilung in Form einer störenden, dunklen Gitterstruktur.

Um dies zu verhindern ist es denkbar, die optisch wirksamen Elemente der Primäroptik und damit auch die Halbleiterlichtquellen so dicht wie möglich nebeneinander anzuordnen, um die dunklen Linien der Gitterstruktur so schmal wie möglich zu machen. Das führt jedoch wegen der baulichen Enge im Scheinwerfer zu Problemen bei der Kontaktierung der Halbleiterlichtquellen, insbesondere bei den Halbleiterlichtquellen im Inneren der Matrix, da die Zuführungsleitungen zwangsläufig zwischen den äußeren Halbleiterlichtquellen zu jeder im Inneren der Matrix angeordneten Halbleiterlichtquelle geführt werden müssen. Außerdem stellt die große Abwärme der Halbleiterlichtquellen und die bautechnisch bedingte mangelnde Ableitung der Wärme, insbesondere von den im Inneren der Matrix angeordneten Halbleiterlichtquellen, in einer solchen Anordnung ein zusätzliches Problem dar.

Zur Vermeidung der dunklen Gitterstruktur wäre es des weiteren denkbar, durch Defokussierung der abbildenden Optik zu den Lichtquellen Licht in die Bereiche der dunklen Gitterlinien zu lenken. Im Allgemeinen kommt es dabei jedoch zu unterschiedlich stark ausgeprägten Überlappungen des Lichts, die in der resultierenden Lichtverteilung heller als die Zwischenflächen erscheinen. Das Ergebnis ist als eine helle statt einer dunklen Gitterstruktur, was ebenfalls unbefriedigend ist.

Ein weiteres Problem stellt sich grundsätzlich beim Einsatz von brechenden dielektrischen Materialien, wie bspw. beim Einsatz von transparenten, totalreflektierenden, insbesondere aber brechenden Körpern, sog. Vorsatzoptiken, als Primäroptikelemente zur Bündelung der Lichtstrahlen, und - noch viel wichtiger - als abbildende Sekundäroptiken. Diese Materialien weisen Dispersionseigenschaften auf. Unter Dispersion versteht man allgemein die Abhängigkeit einer Lichtbrechung von der Wellenlänge des Lichts, das heißt die Brechzahl des Materials ändert sich mit der Wellenlänge. Dies führt in der resultierenden Lichtverteilung (an einer Messwand oder auf der Fahrbahn) zu unterschiedlichen Lichtfarben.

Das Dispersionsproblem liegt vor allem in der abbildenden Sekundäroptik und weniger in den Primäroptiken. Deshalb kommt ein Achromat zum Einsatz, der Dispersionserscheinungen kompensieren kann. Dispersionen an den Primäroptiken sind praktisch vernachlässigbar, so lange die gewünschten Lichtbündel von der abbildenden Sekundäroptik erfasst werden, d.h. die Öffnungswinkel der die Primäroptiken verlassenden Lichtbündel kleiner als die Winkelapertur der abbildenden Optik sind.

Durch die Dispersion an der oder den abbildenden Sekundäroptiken wird bspw. das blaue Lichtspektrum stärker gebrochen als das rote Lichtspektrum. Dadurch kommt es insbesondere im Bereich der ohnehin störenden dunklen oder aufgehellten Gitterstruktur zusätzlich zu Farbseparationen bzw. Farbanhäufungen, d.h. zu weiteren Inhomogenitäten. Die Farbdispersion kann sich sowohl auf den Bereich der Gitterstruktur als auch auf die Zwischenflächen zwischen den Gitterlinien auswirken. Der Einfluss der Dispersion führt dazu, dass sich entlang des Rands der Zwischenflächen an der Messwand oder auf der Straße (das heißt im Bereich der Gitterlinien) z.B. grün-bläuliche Randlinien und die Zwischenflächen eine gelb-orange Färbung aufweisen. Dieser Effekt wird dadurch noch verstärkt, dass das menschliche Auge Farbunterschiede noch deutlicher wahrnimmt als Leuchtdichteunterschiede (reine Hell-Dunkel-Unterschiede).

Ausgehend von dem beschriebenen Stand der Technik liegt der vorliegenden Erfindung die Aufgabe zugrunde, bei Lichtmodulen der eingangs genannten Art die Inhomogenitäten in der resultierenden Verteilung zu reduzieren und nach Möglichkeit sogar ganz zu eliminieren, um eine sowohl hinsichtlich der Hell-Dunkel-Verteilung als auch hinsichtlich der Farbunterschiede in der Lichtverteilung möglichst homogene Lichtverteilung zu erzielen.

Zur Lösung der Aufgabe wird ausgehend von dem Lichtmodul der eingangs genannten Art vorgeschlagen, dass jedem der optisch wirksamen Elemente mehrere Austrittsoptiken zugeordnet sind, nämlich eine Hauptaustrittsoptik mit sammelnden Eigenschaften auf der optischen Achse des optisch wirksamen Elements und benachbart zu der Hauptaustrittsoptik mindestens eine Nebenaustrittsoptik. Ein Großteil der durch eines der optisch wirksamen Elemente gebündelten Strahlen tritt durch die dem optisch wirksamen Element zugeordnete Hauptaustrittsoptik und die übrigen durch das optisch wirksame Element gebündelten Strahlen treten durch eine oder mehrere dem optisch wirksamen Element zugeordnete Nebenaustrittsoptiken hindurch.

Die Strahlen umfassen vorzugsweise für das menschliche Auge sichtbares Licht. Es ist aber auch denkbar, dass sie Anteile im nichtsichtbaren Bereich, bspw. Infrarot-Anteile oder Ultraviolett-Anteile, umfassen. Dabei könnte das Lichtmodul Teil eines Nachtsichtgeräts für Kraftfahrzeuge sein. Der Erfindung liegt die Idee zu Grunde, einerseits durch die Ausgestaltung der Primäroptikelemente und der Austrittsoptiken, sowie deren Anordnung zueinander, die Lichtstrahlen derart zu bündeln, dass ihre optisch wirksamen Querschnitte sich leicht überlagern. Dank der unterschiedlichen Richtungen benachbarter Randanteile werden diese von den Austrittselementen der Primäroptik unterschiedlich ausgelenkt. Die Hauptlichtanteile werden über die gesamte Fläche eines Hauptaustrittselements in die abbildende Sekundäroptik geführt. Da die Hauptaustrittsflächen nahtlos aneinander ansetzen, erscheinen diese für die abbildende Optik gleichmäßig homogen leuchtend. Die Nebenlichtanteile werden durch die Nebenaustrittselemente an der abbildenden Optik vorbeigelenkt. Auf diese Weise wird eine homogene Lichtverteilung über das gesamte Lichtmodul erreicht. Abbildungswirksame Überschneidungen von Lichtbündeln mehrerer optischer Elemente werden dabei vermieden. Störende Bündelanteile, die den definierten abbildungswirksamen Querschnitt überschreiten würden, gelangen nicht auf die Hauptaustrittsoptik, sondern auf mindestens eine der Nebenaustrittsoptiken. Diese Lichtstrahlen geben vorzugsweise keinen Beitrag zur resultierenden Lichtverteilung des Lichtmoduls. Jede der Hauptaustrittsoptiken konzentriert und bündelt also Lichtstrahlen, jede der Nebenaustrittsoptiken lenkt störende Lichtstrahlen weg.

Es ist denkbar, dass die einem bestimmten optisch wirksamen Element zugeordneten Nebenaustrittsoptiken als Hauptaustrittsoptiken benachbarten optischen Elementen zugeordnet sind und umgekehrt, dass die einem bestimmten optisch wirksamen Element zugeordnete Hauptaustrittsoptik als Nebenaustrittsoptiken einem der benachbarten optischen Elemente zugeordnet ist. Das heißt, dass jede der Austrittsoptiken vorzugsweise als Hauptaustrittsoptik für das eine optisch wirksame Element und gleichzeitig als Nebenaustrittsoptik für ein benachbartes optisch wirksames Element wirkt. Vorzugsweise arbeiten jedoch die den optisch wirksamen Elementen ganz am Rand der Matrix zugeordneten äußeren Nebenaustrittsoptiken nicht auch als Hauptaustrittsoptiken.

Die bessere Bündelung durch effiziente Mehrfachreflexion innerhalb der Lichtleitelemente und durch die konvexen Hauptaustrittsflächen verringert die Öffnungswinkel der austretenden Lichtbündel. Mehr Lichtanteile verlaufen näher zu den zugeordneten optischen Achsen, so dass diese Lichtanteile durch die abbildende Sekundäroptik schwächer gebrochen werden, wodurch die wirksame Farbdispersion bzw. die Farbseparation in der Abbildung reduziert werden kann.

Für die Erfindung wichtige Merkmale finden sich in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

Besonders vorteilhaft ist, dass die oder alle einem der optisch wirksamen Elemente zugeordneten Nebenaustrittsoptiken durch diese hindurchtretende, durch das optisch wirksame Element gebündelte Lichtstrahlen an der Sekundäroptik vorbei lenken. Die auf die Nebenaustrittsoptiken auftreffenden Lichtstrahlen stören die Lichtverteilung, da sie in erster Linie für die Gitterstruktur der resultierenden Lichtverteilung des Lichtmoduls verantwortlich sind, und werden deshalb eliminiert. Hauptquelle der Farbdispersion ist die abbildende Sekundäroptik. Deshalb wird dort vorzugsweise ein Achromat eingesetzt. Bei einer solchen achromatischen Abbildung werden Farbseparationen durch die Primäroptiken wieder aufeinander geführt, womit sie auch verschwinden. Vorzugsweise fallen die störenden Anteile in einem so flachen Winkel auf die Lichteintrittsseite der Nebenaustrittsoptiken, dass sie durch die dortige Brechung nicht mehr auf die Sekundäroptik umgelenkt werden können, sondern - wie gewünscht - an der Sekundäroptik vorbeigelenkt werden. Die Anteile können bspw. im Anwendungsfall von einer geeigneten Tubus- oder Blendenanordnung, die die Sekundäroptik umgibt, absorbiert werden. Lichtbündel, die nicht auf die Sekundäroptik treffen, können auch nicht auf die Fahrbahn vor dem Fahrzeug projiziert werden. Sie sind also für einen Betrachter von außen nicht sichtbar.

Außerdem ist besonders vorteilhaft, dass die optisch wirksamen Elemente jeweils einen Lichtleiter mit einer Lichteinkoppelfläche und einer Lichtauskoppelfläche und totalreflektierenden Seitenflächen umfassen. Die Lichtstrahlen werden von einer Lichtquelle, z.B. einer Halbleiterlichtquelle (weiße LED umfassend eine blaue LED und eine gelbe Phosphorkonverterschicht), ausgesandt und über die Lichteinkoppelfläche in das der Lichtquelle zugeordnete und als Lichtleiter wirkende optisch wirksame Element eingekoppelt. Eine solche Halbleiterlichtquelle kann z.B. eine divergente Lichtquelle sein, d.h. sie strahlt ihr Licht in einem großen Raumwinkel ab. Deshalb ist es zur Erlangung eines guten Wirkungsgrades wichtig, dass die Einkoppelfläche sehr nahe an die Halbleiterlichtquelle herangebracht wird. Dadurch trifft ein Großteil des von der Quelle ausgesandten Lichts auf die Einkoppelfläche des Lichtleiters und wird mittels Totalreflexion in Richtung Auskoppelfläche propagiert. Innerhalb der Lichtleiter erfahren die Lichtstrahlen mehrere Reflexionen an den totalreflektierenden Seitenwänden. Bei jeder Reflexion werden die Lichtstrahlen im Lichtleiter aufgrund von nicht parallel verlaufenden Lichtleiterwänden stärker gebündelt. Der Lichtleiter hat im Wesentlichen trichterförmig oder konisch zulaufende Seitenwände; die Querschnittsfläche des Lichtleiters nimmt in Richtung der Auskoppelfläche zu. Selbst stark divergente Strahlen können so auf ihrem Weg durch den Lichtleiter zur Lichtauskoppelfläche hin so umgelenkt werden, dass sie das optisch wirksame Element viel näher zur optischen Achse eines jeden optisch wirksamen Elements verlassen. Mit anderen Worten: Die Reflexionswinkel an den Lichtleiterwänden werden mit jeder Totalreflexion geringer und führen so zumindest für einen Hauptlichtfluss zu einer Bündelung der Lichtstrahlen in einer Hauptlichtaustrittsrichtung. Totalreflexionen haben den großen Vorteil eines hohen Wirkungsgrads. Trotz mehrfacher Reflexionen wird kaum Lichtfluss ausgekoppelt oder an Oberflächendefekten absorbiert. Abgesehen von Fresnel-Verlusten am Ein- und Austritt des Lichts, gibt es auf der Strecke im optisch wirksamen Element auch nahezu keine Absorptionsverluste, da das Lichtleitermaterial hochtransparent ist.

Die Seitenflächen der als Lichtleiter ausgebildeten optisch wirksamen Elemente sind vorzugsweise eben, konkav oder konvex, in der Regel stetig gekrümmt. Es ist denkbar, dass die Seitenflächen in einem ersten Abschnitt eben und in einem anderen Abschnitt konkav oder sogar konvex gekrümmt ausgebildet sind. Ebenso ist es denkbar, dass die Seitenflächen eines Lichtleiters unterschiedliche Verläufe aufweisen, das heißt einige Seitenflächen eines Lichtleiters sind eben, andere sind konkav oder konvex gekrümmt ausgebildet oder aber die Seitenflächen eines Lichtleiters weisen unterschiedliche Bereiche mit ebenen und konkav bzw. konvex gekrümmten Verläufen auf oder aber die Krümmungen der verschiedenen Seitenflächen eines Lichtleiters sind unterschiedlich groß. Ein Lichtleiter umfasst eine nahezu beliebig hohe Zahl an Seitenflächen. Die Anzahl kann zwischen einer (wenn stetig oval), zwei oder drei bis hin zu einer nahezu beliebig hohen Zahl (z.B. vier, fünf, sechs, sieben oder acht) variieren, wenn z.B. diese unstetig oder näherungsweise unstetig ineinander übergehend sind. Vorzugsweise haben die Lichtleiter vier Seitenflächen und im Querschnitt eine rechteckige oder quadratische Form. Selbstverständlich ist es denkbar, dass die verschiedenen Lichtleiter eines Lichtmoduls eine unterschiedliche Anzahl an Seitenflächen und/oder unterschiedliche Querschnittsflächen aufweisen.

Eine besonders homogene Lichtverteilung lässt sich durch das erfindungsgemäße Lichtmodul erzielen, wenn die Seitenflächen der Lichtleiter nicht glatt, sondern rau ausgebildet sind. Vorzugsweise haben die Seitenflächen eine größere Rauhigkeit als die Lichtauskoppelflächen. Die Rauhigkeit der Seitenflächen kann bspw. als eine kontrollierte Welligkeit oder nach der Art von Frostglas ausgebildet sein. Die Rauhigkeit der Seitenflächen kann durch das Werkzeug zur Herstellung der Lichtleiter hervorgerufen werden. Die Innenwände des Werkzeugs haben trotz sorgfältiger Bearbeitung Schlieren und andere Unebenheiten, die bei dem Spritzgießverfahren zur Herstellung der Lichtleiter zu der Rauhigkeit auf den Seitenflächen führen können. Selbstverständlich ist es denkbar, die gewünschte Rauhigkeit der Seitenflächen im Anschluss an das Spritzgießverfahren durch eine gezielte, kontrollierte Bearbeitung der Seitenflächen zu erhöhen oder zu verringern. Die Lichteinkoppel- und Lichtauskoppelflächen des Lichtleiters werden bspw. im Anschluss an das Spritzgießverfahren poliert. Alternativ können zum Herstellen bzw. Polieren auch hochpräzise Diamantfräser eingesetzt werden. Zum Glätten der Lichtleiterseitenflächen kann bspw. eine Elektrode verwendet werden, durch welche die zu glättende Fläche mit Funken beaufschlag wird, die zu einem Temperaturanstieg auf der Oberfläche und schließlich zum Schmelzen der Oberfläche führen. Nach dem Aushärten der Oberfläche ist diese glatter als vorher unmittelbar im Anschluss an das Spritzgießverfahren. Alternativ können zum Glätten und Polieren auch Diamantfräser eingesetzt werden. Die weitgehend ebene Einkoppelfläche des Lichtleiters wird vorzugsweise poliert. Die Seitenflächen werden bspw. mittels einer Elektrode geglättet. Die sphärisch oder asphärisch gewölbte oder kugelförmige Lichtauskoppelfläche des Lichtleiters wird vorzugsweise mittels eines Diamantfräsers erzeugt bzw. poliert.

Der Lichtleiter ist derart ausgebildet, dass die effektive Länge der Lichtwellenleiter größer ist als die Höhe oder Breite der Einkoppel- bzw. Auskoppelfläche im Querschnitt. Dadurch ist die gewünschte Bündelung der eingekoppelten Lichtstrahlen durch mehrfache Totalreflexion möglich. Im Zusammenwirken von Totalreflexion und besonders geformten Seitenwänden des Lichtleiters wird die ausreichende Bündelung, Vermischung und Lichtstärkeprofilbildung der Lichtstrahlen realisiert. Dabei kann die erzeugte Lichtverteilung nahtlos mit anderen Lichtverteilungen anderer Module im Scheinwerfer, wie z.B. einem Grundlichtmodul überlagert werden.

In der Ausgestaltung des optisch wirksamen Elements ist es alternativ auch denkbar, dass das oder jedes optisch wirksame Element einen Reflektor umfasst. Selbstverständlich ist es auch denkbar, dass das Lichtmodul einige optisch wirksame Elemente in Form von Lichtleitern und andere optisch wirksame Elemente in Form von Reflektoren umfasst.

Weiter wird vorgeschlagen, dass die Austrittsoptiken separat von den Lichtleitern ausgebildet sind. Lichtstrahlen eines Lichtleiters treffen nach ihrem Austritt durch die Lichtauskoppelfläche größtenteils auf die dem Lichtleiter zugeordnete, vorzugsweise kissenförmig gewölbte Hauptaustrittsoptik. Diese hat die Aufgabe, das Lichtbündel auf die Sekundäroptik zu lenken. Die Hauptaustrittsoptiken der einzelnen Lichtleiter grenzen vorzugsweise nahtlos und flächenfüllend aneinander. Durch eine optimale Anpassung des Abstandes zwischen der Lichtauskoppelfläche des Lichtleiters und der Hauptaustrittsoptik kann die dunkle Gitterstruktur zwischen den einzelnen Abbildungen der Lichtleiter gezielt unterdrückt werden, so dass sich eine homogene Lichtverteilung über das gesamte Lichtmodul ergibt. Ein kleinerer Teil des ausgekoppelten Lichtbündels gelangt auf eine oder mehrere der an die Hauptaustrittsoptik angrenzenden Nebenaustrittsoptiken. Diese Lichtstrahlen werden auf Grund der anderen Winkelverhältnisse, seitlich an der Sekundäroptik vorbei gelenkt. Somit sind einer Halbleiterlichtquelle bzw. einem optisch wirksamen Element effektiv mehrere Austrittsoptiken zugeordnet: eine hauptsächlich in die Hauptlichtaustrittsrichtung des Lichtmoduls konzentrierende Austrittsoptik und mehrere von der Hauptlichtaustrittsrichtung weglenkende Austrittsoptiken. Das erfindungsgemäße Lichtmodul kann somit eine homogen leuchtende Lichtverteilung erzeugen, insbesondere ohne innerhalb der Verteilung schwankende Lichtintensitäten (z.B. Hell-/ Dunkelbereiche; Streifen; dunkle oder helle Gitterlinien) und mit stark unterdrückten oder ohne farbige Bereiche aufgrund von Dispersion.

Zwischen den Lichtleitern und den separaten Austrittsoptiken kann ein Abstand in Form eines Luftspalts vorgesehen sein. Es ist aber auch denkbar, dass der Abstand zwischen den Lichtauskoppelflächen der Lichtleiter und den Austrittsoptiken durch ein transparentes, lichtdurchlässiges, vorzugsweise farbloses Material gefüllt ist. Durch dieses Material können die aus einem Lichtleiter ausgekoppelten Lichtstrahlen größtenteils auf die dem Lichtleiter zugeordnete Hauptaustrittsoptik treffen. Außerdem kann der restliche Teil der aus dem Lichtleiter ausgekoppelten Lichtstrahlen innerhalb des transparenten Materials zwischen den Lichtauskoppelflächen der Lichtleiter und den Austrittsoptiken zu den angrenzenden Nebenaustrittsoptiken gelangen.

Denkbar ist alternativ jedoch auch, dass die Austrittsoptiken als integraler Bestandteil der Lichtleiter ausgebildet sind. Hierbei wird durch eine optimale Anpassung der gewählten Abstände zwischen Lichtleiterenden und Austrittsoptik erreicht, dass die dunkle Gitterstruktur zwischen den einzelnen Abbildungen der Lichtleiter nicht abgebildet wird und somit die resultierende Lichtverteilung homogenisiert wird. Die Lichtauskoppelflächen der Lichtleiter sind also derart ausgestaltet, dass sie gleichzeitig als Austrittsoptiken aber auch als Begrenzungsblende für die Lichtstrahlen wirken.

Ferner ist vorteilhaft, dass der Lichtleiter und/oder die Austrittsoptik und/oder ein zwischen den Auskoppelflächen der Lichtleiter und den Austrittsoptiken befindliches Material aus Silikon bestehen. Silikon ist ein hochtransparentes Material und weist eine hohe Temperaturbeständigkeit bis ca. 260°C auf. Erhitztes Silikon ist besonders dünnflüssig und kann so während des Spritzgießverfahrens auch in relativ filigrane Strukturen gespritzt werden. Der Lichtleiter soll nämlich während des Betriebs sehr nah zur Halbleiterlichtquelle positioniert sein, soll aber die Halbleiterlichtquelle möglichst nicht berühren, um eine Eingangsbündelung der Lichtstrahlen sicherzustellen.

Der Lichtleiter kann alternativ natürlich auch aus anderen transparenten Materialien, bspw. Glas oder Kunststoff, hergestellt sein. Der Lichtleiter kann durch die Haltevorrichtung in der Nähe der Einkoppelfläche auf ein Quellenraster ausgerichtet und stabilisiert werden. Das Quellenraster gibt eine Struktur der Anordnung der optisch wirksamen Elemente im Lichtmodul vor und kann größer sein als das Raster der Auskoppelflächen. Da die Totalreflexion aber durch eine solche Haltevorrichtung ohne Berührung oder mit wenig Berührung erfolgen muss, ist eine matrixartige Lochmaske mit entsprechend positionierten, bevorzugt ovalen Öffnungen vorgesehen, so dass, wenn die Lichtleiter durch diese Öffnungen hindurchgehen, nur an den Querschnittsecken berührt werden und möglichst wenig optischen Störeinfluss erfahren.

Für die Erfindung ist außerdem vorteilhaft, dass die Sekundäroptik eine Projektionslinse oder eine achromatisierend wirkende Linsenanordnung umfasst. Die Sekundäroptik ist notwendig, um die Leuchtdichteverteilung am Austritt der Primäroptiken auf die Straße vor dem Fahrzeug im gewünschten Maßstab und mit der gewünschten Auflösung zu projizieren bzw. abzubilden. Durch die verbesserte Bündelung d.h. durch die Verringerung der Öffnungswinkel der die Primäroptiken verlassenden Lichtbündel wird bei der Abbildung durch die Sekundäroptik weniger Dispersion hervorgerufen, da mehr Lichtanteile achsennah verlaufen und bei der Abbildung schwächer gebrochen werden. Zusätzlich kann in der Sekundäroptik eine achromatische Anordnung aus zwei Linsen unterschiedlicher Dispersionseigenschaften oder ein Apochromat mit drei oder mehr Linsen unterschiedlicher Dispersionseigenschaften eingesetzt werden, womit die Farbseparation in der Abbildung stark verringert werden kann.

Unter einem Achromaten versteht man in der Optik ein System aus zwei in Lichtdurchtrittsrichtung hintereinander angeordneten Linsen, das die durch Dispersion entstandene Zerlegung des Lichts und die dadurch entstandenen farblichen Unschärfen und Störeffekte wieder kompensiert. Beim Achromaten gilt die vollständige Kompensation für zwei Wellenlängen. Ein sog. Apochromat wird aus drei oder mehr Linsen aufgebaut und kompensiert die Abbildung für drei bzw. mehr einzelne Wellenlängen. Für die Wellenlängen dazwischen gilt die Kompensation näherungsweise. Im erfindungsgemäßen Lichtmodul ist der Einsatz eines Achromaten für ein wirkungsvolles Gesamtkonzept durchaus sinnvoll, um die farblichen Inhomogenitäten zu bereinigen.

Weiterhin ist vorteilhaft, dass für die Beleuchtungseinrichtung eine Teilfernlichtfunktion, bzw. eine blendfreie Fernlichtfunktion vorgesehen ist. Diese Funktion ermöglicht es, dass Bereiche der Fernlichtverteilung, in denen sich entgegenkommende oder vorausfahrende Verkehrsteilnehmer befinden, gezielt ausgeblendet werden. An den ausgeblendeten Bereichen entstehen im Stand der Technik in den Randbereichen durch Dispersion farbliche Inhomogenitäten. Diese können bei dem erfindungsgemäßen Lichtmodul zumindest teilweise eliminiert werden, indem einerseits durch die Nebenaustrittsoptiken sich überlappende Lichtbündelanteile nicht auf die Sekundäroptik treffen und andererseits ein wahlweise vorgesehener Achromat die Farbdispersion in der Sekundäroptik bzw. die Farbseparation in der Abbildung weiter reduzieren kann.

Ebenso ist es vorteilhaft, wenn die Beleuchtungseinrichtung durch eine geeignete Einrichtung identifizierte Gefahrenquellen (Fußgänger, Gegenstände, etc.) auf der Fahrbahn zur Sicherheit des Fahrers verstärkt ausleuchtet oder auf andere Weise sichtbar hervorhebt und die Aufmerksamkeit des Fahrers auf die Gefahrenquelle lenkt. Dabei wird also anders als bei Teilfernlicht, ein identifiziertes Objekt auf oder neben der Fahrbahn nicht von der Lichtverteilung ausgenommen, sondern gerade besonders deutlich beleuchtet. Dies kann durch besonders helles, blinkendes Anstrahlen des Objekts erfolgen. Auch hier können in den Randbereichen des ausgeleuchteten Bereichs farbliche Inhomogenitäten entstehen, die durch die Erfindung deutlich verringert werden können, indem einerseits durch die Nebenaustrittsoptiken störende Lichtbündel von der Sekundäroptik weggelenkt werden und andererseits ein wahlweise vorgesehener Achromat durch Dispersion entstandene Anteile in der Abbildung kompensiert.

Nachfolgend wird anhand der Figuren ein Ausführungsbeispiel der Erfindung beispielhaft erläutert. Es zeigen:
- Figur 1: eine schematische, perspektivische Darstellung eines erfindungsgemäßen Lichtmoduls gemäß einer bevorzugten Ausführungsform;
- Figur 1a: das erfindungsgemäße Lichtmodul aus Figur 1 in einer vertikalen Schnittansicht;
- Figur 2: eine bevorzugte Ausführungsform einer Primäroptik des Lichtmoduls aus Figur 1 in einer Draufsicht;
- Figur 3: die Primäroptik aus Figur 1 oder 2 in einer perspektivischen Ansicht;
- Figur 4: eine weitere bevorzugte Ausführungsform einer Primäroptik des Lichtmoduls aus Figur 1 in einer Draufsicht;
- Figur 5: die Primäroptik aus Figur 4 in einer perspektivischen Ansicht;
- Figur 6: die Primäroptik aus einer der Figuren 1 bis 3 in einer Seitenansicht;
- Figur 7: einen Teilbereich der Primäroptik aus einer der Figuren 1 bis 3 in einer Draufsicht;
- Figur 8: den Teilbereich der Primäroptik aus Figur 7 in Lichtaustrittsrichtung betrachtet;
- Figur 9: den Teilbereich der Primäroptik aus Figur 7 oder 8 in einer perspektivischen Ansicht; und
- Figur 10: eine Darstellung zur Erläuterung der Funktionsweise der Primäroptik im erfindungsgemäßen Lichtmodul.

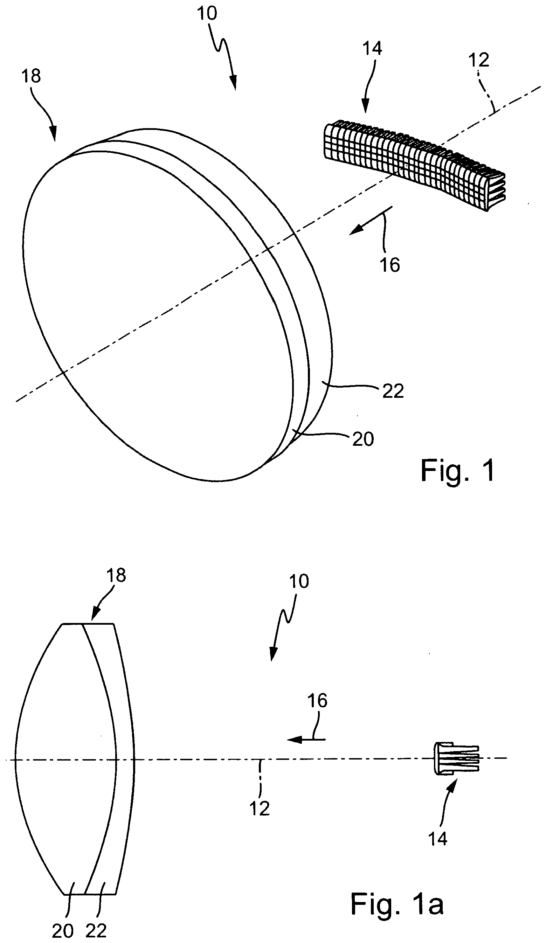

Figur 1 zeigt eine schematische, perspektivische Darstellung eines erfindungsgemäßen Lichtmoduls 10 zum Einsatz in einer Beleuchtungseinrichtung eines Kraftfahrzeugs. Das Lichtmodul 10 ist in Figur 1a in einem Vertikalschnitt dargestellt. Im Lichtmodul 10 sind auf einer optischen Achse 12 eine Primäroptik 14 und im weiteren Strahlenverlauf in Lichtaustrittsrichtung 16 eine Sekundäroptik 18 angeordnet. Die Primäroptik 14 wird weiter hinten näher erläutert. Die Sekundäroptik 18 bildet die von der Primäroptik 14 ausgesandten Lichtstrahlen zur Erzielung einer gewünschten Lichtverteilung auf eine Fahrbahn vor dem Kraftfahrzeug ab. Die Sekundäroptik ist als ein Achromat 18 ausgebildet.

Unter einem Achromaten versteht man in der Optik ein System aus zwei Linsen 20 und 22, die aus verschiedenen optischen Materialien mit unterschiedlich starker Dispersion (unterschiedliche Abbe-Zahl) bestehen. Die Linsen 20 und 22 können aus Glas, Kunststoff oder Silikon hergestellt sein. Das System weist eine Sammellinse 22 (bevorzugt aus Kronglas) und eine Zerstreuungslinse 20 (bevorzugt aus Flintglas) mit kleinerer Abbe-Zahl und somit stärkerer Dispersion als die Sammellinse 22 auf. Dadurch kann eine unterschiedliche Brennweite von zwei vordefinierten, verschiedenen Spektralfarben (sog. Farblängsfehler), also für zwei Wellenlängen, korrigiert werden. Das bedeutet, dass das System für die zwei Spektralfarben den Farblängsfehler kompensiert, da für die beiden Spektralfarben durch das System der gleiche Brennpunkt in der Abbildung erzeugt wird. Die Materialien der beiden Linsen 20 und 22 werden vorzugsweise so gewählt, dass Wellenlängen im Rotspektrum und im Blauspektrum kompensiert werden können. Alternativ können auch Wellenlängen aus dem Blauspektrum und dem Gelbspektrum kompensiert werden. Die Materialauswahl für die Linsen 20, 22 kann in der Praxis auch so vorgenommen werden, dass keine vollständige Achromatisierung erfolgt, jedoch eine deutliche Reduzierung der Farbdispersion und deutlich weniger Farbseparation in der Abbildung erreicht werden. Zum Beispiel der Einsatz von zwei Linsen aus unterschiedlichen Kunststoffarten wie Polycarbonat (PC) und Polymethylmethacrylat (PMMA) ergeben zwar keinen perfekten Achromaten, führen aber zu einer deutlichen Reduzierung der Farbdispersion und zu deutlich weniger Farbseparation in der Abbildung.

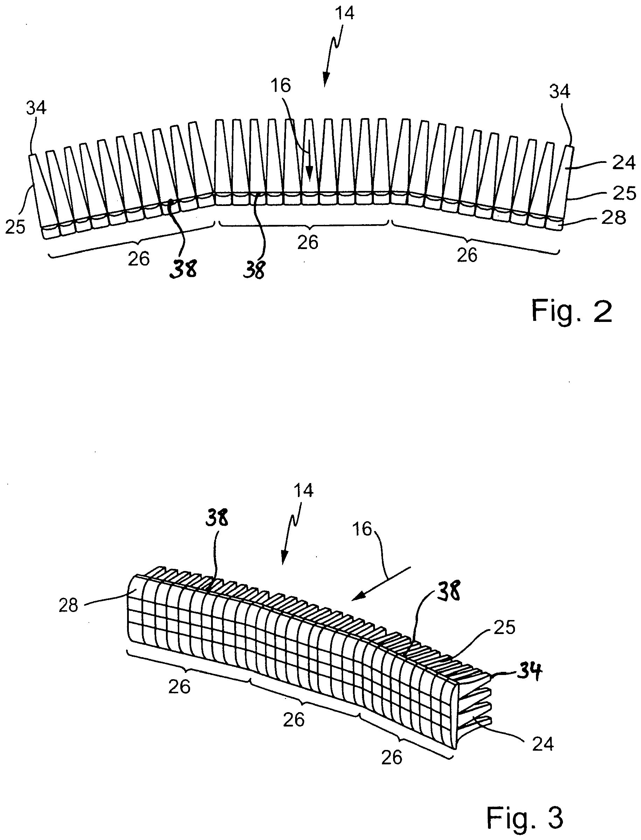

Figur 2 zeigt eine detaillierte Darstellung der Primäroptik 14 in einer Draufsicht und Figur 3 zeigt die Primäroptik 14 in einer perspektivischen Ansicht. Die Primäroptik 14 umfasst mehrere matrixartig angeordnete optisch wirksame Elemente 24 mit totalreflektierenden Eigenschaften, wobei jeweils, der Übersichtlichkeit wegen, nur ein Element mit dem Bezugszeichen gekennzeichnet ist. Die optisch wirksamen Elemente 24 wirken als Lichtleiter und sind bevorzugt aus Silikon hergestellt. Die optisch wirksamen Elemente 24 können alternativ natürlich auch aus Glas, Kunststoff oder einem technisch vergleichbaren Material hergestellt sein.
Sie weisen in Lichtaustrittsrichtung 16 in einem Teilbereich konkav gekrümmte Seitenflächen 25 auf, d.h. sie sind im Wesentlichen konisch bzw. trichterförmig ausgebildet. Sie sind aber auch, in einem anderen Teilbereich eben, aber konisch verlaufend, ausgebildet. Wichtig ist, dass in Lichtaustrittsrichtung 16 die Seitenflächen 25 des optisch wirksamen Elements 24 nicht parallel verlaufen, sondern auseinander driften.

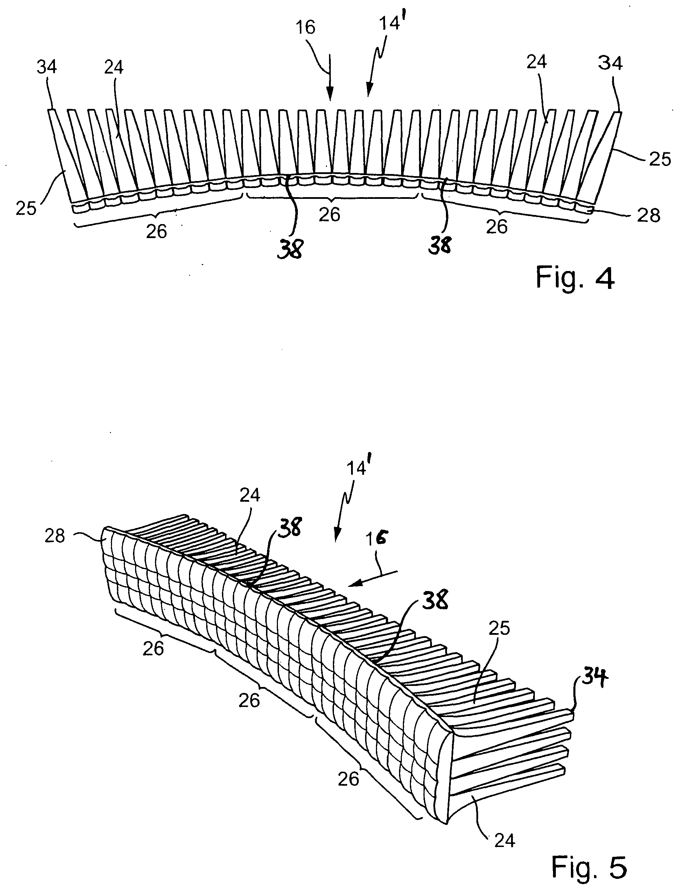

Figur 4 zeigt ein weiteres Beispiel für eine Primäroptik 14' in einer Draufsicht, und Figur 5 zeigt das weitere Beispiel der Primäroptik 14' in einer perspektivischen Ansicht. Die in den Figuren 4 und 5 gezeigte Primäroptik 14' unterscheidet sich von der Primäroptik 14 aus den Figuren 2 und 3 dadurch, dass Austrittsflächen 38 der Primäroptik 14' knickfrei angeordnet sind, das heißt kontinuierlich verlaufen. Außerdem sind die Austrittsflächen 38 der optisch wirksamen Elemente 24 nahe der Brennfläche (sog. Petzval-Fläche) der abbildenden Sekundäroptik 18 angeordnet. Die Lichtquellen, die vor den Lichteintrittsflächen 34 positioniert sind, liegen auf einer gemeinsamen Ebene.

Wie aus Figur 3 ersichtlich, sind die optisch wirksamen Elemente 24 in einer oberen bzw. unteren Reihe der Anordnung im Vergleich zu den optisch wirksamen Elemente 24 der übrigen Reihen mit einer größeren und anders ausgebildeten Frontfläche und Wandung ausgestaltet. Näheres zur Ausgestaltung eines optisch wirksamen Elements 24 folgt weiter hinten.

Mehrere nebeneinander und untereinander angeordnete optisch wirksame Elemente 24 können zu einer Matrix 26 zusammengefasst sein. Die einzelnen optisch wirksamen Elemente 24 sind derart angeordnet, dass sie zwar aneinandergrenzen, aber keine Berührungsfläche zueinander haben. Dies wird bei der Herstellung der Matrix 26 über eine matrixartige Lochmaske (nicht dargestellt), die den Anstand der einzelnen optisch wirksamen Elemente 24 zueinander festlegt und als Haltevorrichtung dient, realisiert. Eine Berührung der einzelnen optisch wirksamen Elemente 24 würde die Totalreflexion stören und muss deshalb verhindert werden.

Die konisch verbreiterte Seite der optisch wirksamen Elemente 24 ist bevorzugt durch eine separat angeordnete, kissenförmig ausgebildete Austrittsoptik 28 in einem vorgegebenen Abstand bedeckt. Die Austrittsoptiken 28 stellen einen transparenten, optisch wirksamen Körper mit optisch brechenden Eigenschaften dar und weisen eine im Wesentlichen ungleichmäßig ausgebildete Materialstärke auf. Die Austrittsoptiken 28 der einzelnen Lichtleiter 24 grenzen nahtlos und flächenfüllend aneinander. Die Austrittsoptiken 28 sind bevorzugt aus Silikon hergestellt, sie können alternativ natürlich auch aus Glas oder Kunststoff hergestellt sein.

Zwischen dem optisch wirksamen Element 24 und der separat angeordneten Austrittsoptik 28 kann der Abstand in Form eines Luftspalts vorgesehen sein. Es ist aber auch denkbar, dass der Abstand durch ein transparentes, lichtdurchlässiges, vorzugsweise farbloses Material gefüllt ist. Die Austrittsoptik 28 kann jedoch auch alternativ integraler Bestandteil der optisch wirksamen Elemente 24 sein. Der Übersichtlichkeit wegen nur eine Austrittsoptik mit dem Bezugszeichen 28 gekennzeichnet.

Die in den Figuren 2 und 3 dargestellte Primäroptik 14 weist drei Matrizen 26 auf, wobei jede Matrix 26 bei einer Draufsicht in einem Winkel von ca. 10° versetzt angeordnet sind. Für sich ist jede Matrix 26 identisch aufgebaut. Die Anzahl und die Anordnung der optisch wirksame Elemente 24 jeder Matrix 26, sowie die Anzahl der Matrizen 26 ist nahezu beliebig und kann den technischen Anforderungen entsprechend angepasst werden. In den Figuren 2 und 3 ist die Anordnung lediglich beispielhaft angenommen. Die Einkoppelflächen 34 können - wie in den Figuren 4 und 5 gezeigt - auch auf einer einzigen Ebene angeordnet sein, womit die Verdrahtung und die Montage der LED-Platine deutlich vereinfacht werden kann. Außerdem können die Auskoppelflächen 38 der Primäroptik 24 auf einer knickfreien Fläche, nahe der sog. Petzval-Fläche positioniert werden, damit die Abbildungsschärfe der Randlichtleiter 24 verbessert werden kann.

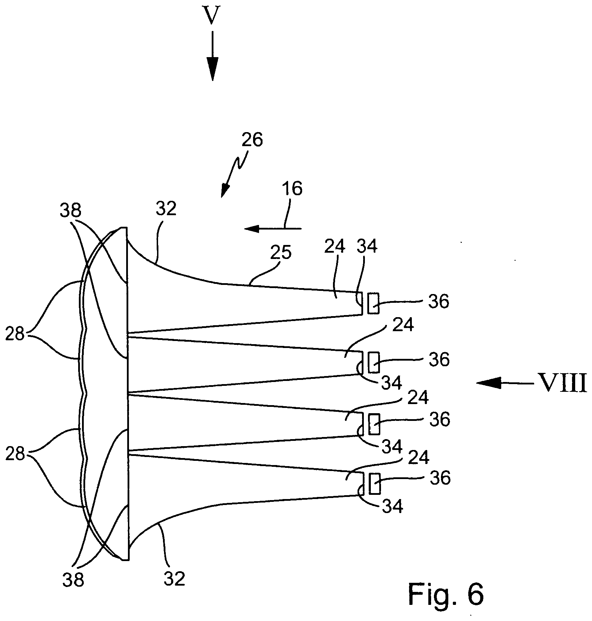

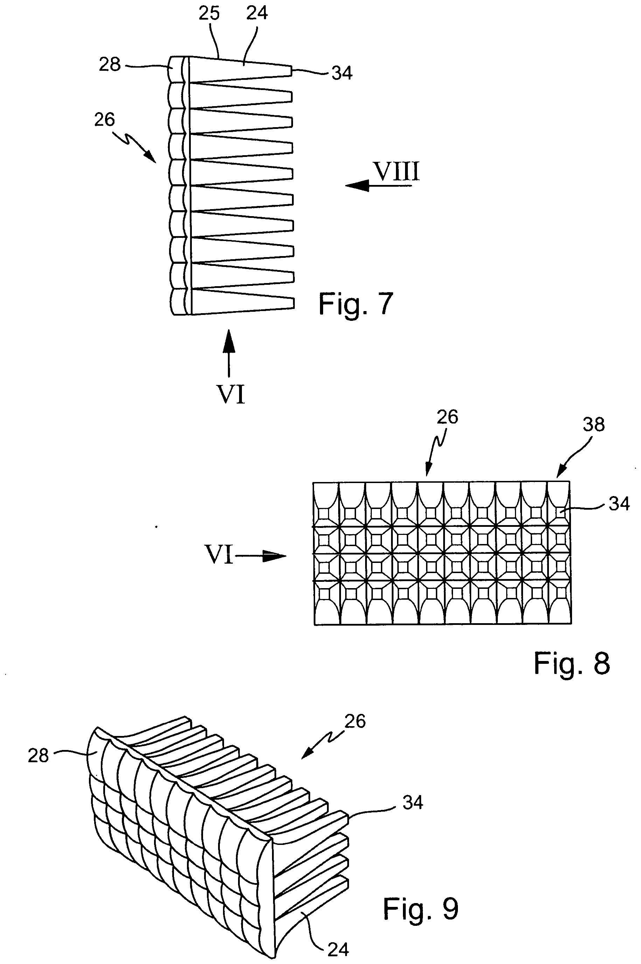

Figur 6 zeigt die Matrix 26 in einer Seitenansicht im Detail. Darüber hinaus zeigt zur besseren Verdeutlichung Figur 7 eine Draufsicht auf eine Zeile der Matrix 26, Figur 8 eine Rückansicht auf die Matrix 26 und Figur 9 eine perspektivische Ansicht auf die Matrix 26 von vorne, wobei in den Figuren 7 bis 9 nur exemplarisch Bezugszeichen eingesetzt sind. Die beispielhaft angenommene Matrix 26 umfasst vier Zeilen der konisch bzw. trichterförmig ausgestalteten optisch wirksamen Elemente 24, die untereinander angeordnet sind.

Die Seitenflächen 25 im Inneren der optisch wirksamen Elemente 24 sind im Wesentlichen eben (stetig), glatt und konisch ausgestaltet; die Seitenflächen 25 in Figur 6 bis 9 an der Ober- und Unterseite der Matrix 26 sind dagegen trichterförmig ausgestaltet, so dass diese Seitenflächen 25 in Lichtaustrittsrichtung 16 zunächst eben und konisch und dann in einem konkav oder konvex gekrümmten Bogen 32 auslaufen. Es ist auch denkbar, dass die Seitenflächen 25 eines optisch wirksamen Elements 24 unterschiedliche Bereiche mit ebenem und konkav bzw. konvex gekrümmten Verläufen aufweisen oder die Krümmungen der verschiedenen Seitenflächen 25 eines optisch wirksamen Elements 24 unterschiedlich groß sind. Es ist auch möglich, dass alle Seitenflächen 25 aller optisch wirksamen Elemente 24 trichterförmig ausgestaltet sind. Selbstverständlich können alle Seitenflächen 25 aller optisch wirksamen Elemente 24 auch eben und konisch ausgebildet sein.

Alternativ können die Seitenflächen 25 der optisch wirksamen Elemente 24 nicht glatt, sondern rau ausgebildet sein. Dabei kann die Rauhigkeit der Seitenflächen 25 bspw. als eine kontrollierte Welligkeit oder nach der Art von Frostglas ausgebildet sein.

Eine Schmalseite jedes optisch wirksamen Elements 24 ist als eine Lichteinkoppelfläche 34 ausgebildet, in der Lichtstrahlen einer unmittelbar an der Lichteinkoppelfläche 34 angeordneten Halbleiterlichtquelle 36 eingekoppelt wird. Zur besseren Fokussierung der von der Halbleiterlichtquelle 36 ausgesandten Lichtstrahlen kann noch ein in Lichtaustrittsrichtung reflektierender Reflektor (nicht dargestellt) angeordnet sein. Die Halbleiterlichtquelle 36 könnte auch Infrarot- oder Ultraviolettstrahlen, bspw. zur Erkennung von Gefahrenobjekten vor dem Fahrzeug als Bestandteil eines Nachtsichtgeräts aussenden. Die Halbleiterlichtquelle 36 ist in einem so geringen Abstand zur Lichteinkoppelfläche 34 angeordnet, dass ein möglichst großer Lichtfluss von der Lichteinkoppelfläche 34 eingefangen wird, aber es auch bei Erhitzung der Halbleiterlichtquelle 36 im Betrieb durch Wärmeausdehnung möglichst nicht zu einer gegenseitigen Berührung mit der Lichteinkoppelfläche 34 kommt. An den Seitenflächen 25 der optisch wirksamen Elemente 24 ist eine Totalreflexion der eingekoppelten Lichtstrahlen möglich.

Die Stirnseite des konischen bzw. trichterförmigen Auslaufs 32 der optisch wirksamen Elemente 24 ist in Lichtaustrittsrichtung 16 als eine Lichtauskoppelfläche 38 für die Lichtstrahlen ausgestaltet. Alle Lichtauskoppelflächen 38 der optisch wirksamen Elemente 24 einer Matrix 26 bilden eine zusammenhängende Fläche, die nicht unbedingt eine Ebene sein muss. Das optisch wirksame Element 24 ist so dimensioniert, dass die effektive Länge eines solchen Lichtleiters wesentlich größer als die Querschnittsmaße der Einkoppelfläche 34 und/oder der Lichtauskoppelfläche 38 ist.

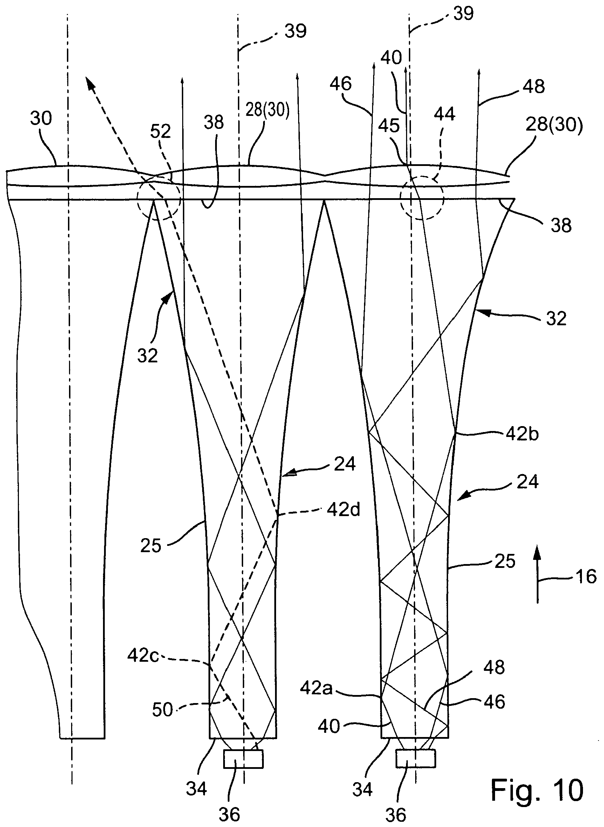

Figur 10 zeigt zwei mit unterschiedlich stark gekrümmten Seitenflächen 25 ausgebildete optisch wirksame Elemente 24 mit beispielhaft eingezeichneten Strahlenverläufen. Auf einer optischen Achse 39 sind in Lichtaustrittsrichtung 16 die Halbleiterlichtquelle 36, die Lichteinkoppelfläche 34, die Lichtauskoppelfläche 38 und eine als Hauptaustrittsoptik 28 bezeichnete Austrittsoptik angeordnet. Anhand von Figur 10 wird das Funktionsprinzip der Primäroptik des Lichtmoduls 10 erläutert. Optische Achsen 39 der einzelnen Lichtleiter 24 sind im Allgemeinen nicht zueinander parallel, da das LED-Raster größer sein muss als das Auskoppelflächenraster, damit die austretenden Bündel in die abbildende Sekundäroptik 18 besser treffen können.

Aus den Halbleiterlichtquellen 36 treten üblicherweise divergente Lichtstrahlen aus. Ein erster exemplarischer Lichtstrahl 40 wird von der Halbleiterlichtquelle 36 ausgesandt und trifft schräg auf die Lichteinkoppelfläche 34 des in Figur 10 rechts außen dargestellten optisch wirksamen Elements 24. Beim Übergang vom dünnen Medium Luft zum dichteren Medium des optisch wirksamen Elements 24 (bspw. Silikon) wird der Lichtstrahl 40 beim Eintritt in den Lichtleiter 24 gebrochen.

An den Seitenflächen 25 des optisch wirksamen Elements 24 wird der Lichtstrahl 40 zweimal totalreflektiert (vgl. Bezugszeichen 42a und 42b). Bei jeder Reflexion 42a und 42b wird durch die nicht parallel verlaufenden Seitenflächen 25 der Lichtstrahl 40 weiter gebündelt. Dabei unterstützt besonders die konkav gekrümmte Ausgestaltung der Seitenflächen 25 diesen Effekt. Zwei weitere Lichtstrahlen 46 und 48 zeigen bei anderen Einkoppelwinkeln deren jeweilige Bündelung bzw. Fokussierung. Man erkennt insbesondere anhand des Lichtstrahls 48, dass besonders schräg in den Lichtleiter 24 einfallende Lichtstrahlen oft totalreflektiert und dadurch mehr und mehr gebündelt werden. Die in den Lichtleiter 24 eingekoppelten Lichtstrahlen 40, 46, 48 werden also in Lichtaustrittsrichtung 16 gebündelt.

Wird der Lichtstrahl 40 weiter verfolgt, so erkennt man, dass beim Übergang vom dichten Medium des optisch wirksamen Elements 24 zum dünnen Medium Luft der Lichtstrahl 40 an der Lichtauskoppelfläche 38 wieder gebrochen wird. Da der exemplarische Lichtstrahl 40 trotz Bündelung leicht schräg auf die Lichtauskoppelfläche 38 trifft, wird die Schräge durch die Brechung geringfügig verstärkt (vgl. Bezugszeichen 44).

Im vorgegebenen Abstand zur Lichtauskoppelfläche 38 ist jedem Lichtleiter 24 in Lichtaustrittsrichtung 16 die kissenförmige Hauptaustrittsoptik 28 zugeordnet. Die jeweils benachbart zur Hauptaustrittsoptik 28 angeordnete Austrittsoptik bildet eine Nebenaustrittsoptik 30. Der Lichtstrahl 40 wird in der Austrittsoptik 28 in der Weise umgelenkt, dass der Lichtstrahl 40 beim Durchtritt durch die Hauptaustrittsoptik 28 weiter gebrochen wird, so dass die Lichtstrahlen auf die in Figur 10 nicht dargestellte Sekundäroptik 18 zu lenken. Die kissenförmige Ausgestaltung der Austrittsoptiken 28 unterstützt diese Korrektur. Ein Großteil der durch eines der Lichtleiter 24 gebündelten Lichtstrahlen (z.B. Lichtstrahlen 40, 46, 48) treten durch die dem Lichtleiter 24 zugeordnete Hauptaustrittsoptik 28 und die restlichen durch den Lichtleiter 24 gebündelten Lichtstrahlen durch eine oder mehrere dem optisch wirksamen Element angrenzende Nebenaustrittsoptik 30 hindurch.

Im Übrigen kann durch eine raue Ausgestaltung der Seitenflächen 25 die Homogenisierung der Lichtverteilung weiter gesteigert werden.

Weiter links in Figur 10 ist eine zweite Lichtquelle 36 angeordnet, die einem weiteren Lichtleiter 24 zugeordnet ist. Diesem Lichtleiter 24 ist auf seiner optischen Achse 39 ebenfalls eine Hauptaustrittsoptik 28 zugeordnet, wobei diese Austrittsoptik 28 für den rechts in Figur 10 gezeigten Lichtleiter 24 als Nebenaustrittsoptik 30 dient. Für den linken Lichtleiter 24 bilden die in Figur 10 ganz rechts gezeigte Austrittsoptik 28 sowie die nur bereichsweise gezeichnete Austrittsoptik ganz links, die mit dem Bezugszeichen 30 gekennzeichnet ist, sog. Nebenaustrittsoptiken.

Die linke Lichtquelle 36 aus Figur 10 sendet unter anderem auch einen exemplarischen, gestrichelt gezeichneten Lichtstrahl 50 aus. Der Lichtstrahl 50 wird nach zweimaliger Totalreflexion (vgl. Bezugszeichen 42c und 42d) im Lichtleiter 24 über einen Randbereich 52 der Lichtauskoppelfläche 38 ausgekoppelt. Ein solcher Strahl 50 würde die Abbildungen benachbarter Lichtleiter 24 überlagern und so zu einer hellen Gitterstruktur der resultierenden Lichtverteilung führen. Erfindungsgemäß trifft der ausgekoppelte Lichtstrahl 50 jedoch nicht auf die dem Lichtleiter 24 zugeordnete Hauptaustrittsoptik 28, sondern auf die in einem Abstand zur optischen Achse 39 des zugeordneten Lichtleiters 24 angeordnete Nebenaustrittsoptik 30. An der Nebenaustrittsoptik 30 wird durch den flachen Auftreffwinkel des Lichtstrahls 50 derart abgelenkt, dass er anschließend nicht auf die in Figur 10 nicht dargestellte Sekundäroptik 18 trifft. Der Lichtstrahl 50 wird vorzugsweise von einer geeigneten Tubus- oder Blendenanordnung, die um die Sekundäroptik 18 angeordnet sein kann, absorbiert (nicht dargestellt). Die Absorption des Lichtstrahls 50 kann in Lichtaustrittsrichtung betrachtet vor oder nach der Sekundäroptik 18 erfolgen. Das bedeutet, dass der Lichtstrahl 50 keinen Beitrag zur resultierenden Lichtverteilung leistet. Das Beispiel zeigt, dass jede Austrittoptik 28 für das direkt zugeordnete optisch wirksame Element 24 Hauptaustrittsoptik 28 sein kann, für die benachbarten optisch wirksamen Elemente 24 aber gleichzeitig auch Nebenaustrittsoptik 30 sein kann.

Der Lichtstrahl 50 würde, wenn er nicht weggelenkt und anschließend absorbiert würde, den Saum um die von dem optisch wirksamen Element 24 erzeugte Lichtverteilung aufhellen, was die homogene Lichtverteilung stören würde. Die optisch wirksamen Elemente 24 einer Matrix 26 sowie die zugeordnete Austrittsoptik 28 sind so angeordnet und ausgebildet, dass Lichtstrahlen ,die den Randbereich 52 der Lichtauskoppelfläche 38 treffen, immer besonders schräg auf eine Nebenaustrittsoptik 30 treffen und von dort von der Sekundäroptik 18 weg gelenkt werden. Ziel ist es dabei, den Anteil der wegzulenkenden Lichtstrahlen 50 so weit wie möglich zu reduzieren, um einen besonders guten Wirkungsgrad zu erreichen.

Jeder von der Halbleiterlichtquellen 36 ausgesandte Lichtstrahl 40, 46, 48, 50 wird an der Lichteinkoppelfläche 34, an der Lichtauskoppelfläche 38 und der Austrittsoptik 28 gebrochen. Dabei weisen die dabei verwendeten brechenden Materialien generell Dispersionseigenschaften auf. Das bedeutet, dass bei einer Brechung das ursprünglich weiße Licht, das aus einem Wellenlängenspektrum der Spektralfarben besteht, aufgelöst wird und für jede Spektralfarbe zu unterschiedlichen Brennweiten und deshalb zu einer farbigen, unscharfen Abbildung führt. Besonders auffällig sind dabei die Farben Blau und Rot. Dies führt zu Inhomogenitäten in der resultierenden Lichtverteilung. Um dies zu verhindern, besteht die Sekundäroptik 18 aus einem sogenannten Achromaten. Der oben beschriebene Achromat 18 besteht aus zwei Linsen, der für zwei Farben, bevorzugt Blau und Rot, die zunächst unterschiedlichen Brennweiten wieder zusammenführt und damit die aus der Dispersion herrührenden farblichen Inhomogenitäten weitestgehend kompensiert. Natürlich werden auch bei der Verwendung eines Achromaten aufgespreizte farbige Lichtstrahlen bei einem Auftreffen auf den Randbereich 52 nach der oben beschriebenen Methode ebenfalls vom Achromaten weggelenkt und vorzugsweise absorbiert, so dass solche Lichtstrahlen von vorn herein eliminiert werden und erst gar nicht an der Erzeugung der resultierenden Lichtverteilung teilhaben.

Die Primäroptik 14 vermeidet also die Abbildung einer dunklen Gitterstruktur durch die nichtleuchtenden Abstände zwischen den Lichtleiterenden 38 und die Abbildung einer hellen Gitterstruktur durch die sich überlappenden Querschnitte der die Lichtleiter 24 verlassenden "noch" divergenten Lichtbündel. Durch die erfindungsgemäße Ausgestaltung der Sekundäroptik 18 werden zudem die Auswirkungen der Dispersion an der Sekundäroptik 18 verringert.

## Patentansprüche

1. Lichtmodul (10) für eine Beleuchtungseinrichtung eines Kraftfahrzeugs, mit mehreren matrixartig angeordneten Halbleiterlichtquellen (36), die elektromagnetische Strahlung emittieren, wobei im Strahlengang der Halbleiterlichtquellen (36) eine Primäroptik (14) angeordnet ist, die als ein Optikarray mit mehreren matrixartig angeordneten optisch wirksamen Elementen (24) ausgestaltet ist und die von den Halbleiterlichtquellen (36) ausgesandten Strahlen bündelt, wobei im weiteren Verlauf des Strahlengangs eine Sekundäroptik (18) angeordnet ist, welche die gebündelten Strahlen zur Erzielung einer gewünschten Lichtverteilung auf einer Fahrbahn vor dem Kraftfahrzeug abbildet, wobei die Primäroptik (14) neben den optisch wirksamen Elementen (24) im Strahlengang nach diesen angeordnet zusätzlich optisch wirksame Austrittsoptiken (28, 30) aufweist, **dadurch gekennzeichnet, dass** jedem der optisch wirksamen Elemente (24) mehrere Austrittsoptiken (28, 30) zugeordnet sind, nämlich eine Hauptaustrittsoptik (28) mit sammelnden Eigenschaften auf der optischen Achse (39) des optisch wirksamen Elements (24) und benachbart zu der Hauptaustrittsoptik (28) mindestens eine Nebenaustrittsoptik (30), wobei ein Großteil der durch eines der optisch wirksamen Elemente (24) gebündelten Strahlen durch die dem optisch wirksamen Element (24) zugeordnete Hauptaustrittsoptik (28) und die übrigen durch das optisch wirksame Element (24) gebündelten Strahlen durch eine oder mehrere dem optisch wirksamen Element (24) zugeordnete Nebenaustrittsoptiken (30) hindurchtreten.

2. Lichtmodul (10) nach Anspruch 1, **dadurch gekennzeichnet, dass** die oder alle einem der optisch wirksamen Elemente (24) zugeordneten Nebenaustrittsoptiken (30) durch diese hindurchtretende, durch das optisch wirksame Element (24) gebündelte Strahlen an der Sekundäroptik (18) vorbei lenken.

3. Lichtmodul (10) nach Anspruch 1 oder 2, **dadurch gekennzeichnet, dass** die optisch wirksamen Elemente (24) jeweils einen Lichtleiter mit einer Lichteinkoppelfläche (34) und einer Lichtauskoppelfläche (38) und totalreflektierenden Seitenflächen (25) umfassen.

4. Lichtmodul (10) nach Anspruch 3, **dadurch gekennzeichnet, dass** die Lichteinkoppelflächen (34) der Lichtleiter (24) eine kleinere Fläche umfassen als die Lichtauskoppelflächen (38), so dass die Seitenflächen (25) der Lichtleiter (24) ausgehend von den Lichteinkoppelflächen (34) in Richtung der Lichtauskoppelflächen (38) schräg auseinanderlaufen.

5. Lichtmodul (10) nach Anspruch 3 oder 4, **dadurch gekennzeichnet, dass** die Lichtleiter (24) im Längsschnitt betrachtet ebene oder konkav gekrümmte Seitenflächen (25) aufweisen.

6. Lichtmodul (10) nach einem der Ansprüche 3 bis 5, **dadurch gekennzeichnet, dass** die Seitenflächen (25) eine größere Rauhigkeit aufweisen als die Lichtauskoppelflächen (38).

7. Lichtmodul (10) nach Anspruch 1 oder 2, **dadurch gekennzeichnet, dass** die optisch wirksamen Elemente (24) jeweils einen Reflektor umfassen.

8. Lichtmodul (10) nach einem der Ansprüche 3 bis 6, **dadurch gekennzeichnet, dass** die Austrittsoptiken (28, 30) separat von den Lichtleitern (24) ausgebildet sind.

9. Lichtmodul (10) nach einem der Ansprüche 3 bis 6, **dadurch gekennzeichnet, dass** die Austrittsoptiken (28, 30) als integraler Bestandteil der Lichtleiter (24) ausgebildet sind.

10. Lichtmodul (10) nach Anspruch 8 oder 9, **dadurch gekennzeichnet, dass** die Lichtleiter (24) und/oder die Austrittsoptiken (28, 30) aus Silikon hergestellt sind.

11. Lichtmodul (10) nach einem der vorhergehenden Ansprüche, **dadurch gekennzeichnet, dass** die Sekundäroptik (18) eine Projektionslinse umfasst.

12. Lichtmodul (10) nach einem der Ansprüche 1 bis 10, **dadurch gekennzeichnet, dass** die Sekundäroptik (18) eine achromatisierend wirkende Linsenanordnung (20, 22) umfasst.

13. Lichtmodul (10) nach einem der vorhergehenden Ansprüche, **dadurch gekennzeichnet, dass** die Halbleiterlichtquellen (36) Licht in einem sichtbaren Wellenlängenbereich aussenden.

14. Lichtmodul (10) nach einem der vorhergehenden Ansprüche, **dadurch gekennzeichnet, dass** die von dem Lichtmodul erzeugte Lichtverteilung zur Erzeugung einer Teilfernlichtfunktion oder einer blendfreien Fernlichtfunktion dient.

15. Lichtmodul (10) nach einem der vorhergehenden Ansprüche, **dadurch gekennzeichnet, dass** das Lichtmodul auf der Fahrbahn vor dem Kraftfahrzeug identifizierte Gefahrenquellen verstärkt ausleuchtet.

## Claims

1. A light module (10) for a lighting device of a motor vehicle, having a plurality of semiconductor light sources (36) arranged in matrixlike fashion, which emit electromagnetic radiation, in which in the beam path of the semiconductor light sources (36) a primary optical system (14) is located which is designed as a lens array with a plurality of optically effective elements (24) arranged in matrixlike fashion and which focuses the beams emitted by the semiconductor light sources (36), and in the further course of the beam path a secondary optical system (18) is located, which projects the focused beams for achieving a desired light distribution on a roadway ahead of the motor vehicle, and the primary optical system (14), besides the optically effective elements (24), additionally has optically acting exit optical systems (28, 30) located in the beam path downstream of the optically effective elements, **characterized in that** each of the optically effective elements (24) is assigned a plurality of exit optical systems (28, 30), namely one main optical system (28) with light-gathering properties on the optical axis (39) of the optically effective element (24) and, adjacent to the main optical system (28), at least one auxiliary exit optical system (30), and a large portion of the beams focused by one of the optically effective elements (24) pass through the main optical system (28) assigned to the optically effective element (24), and the other beams focused by the optically effective element (24) pass through one or more auxiliary exit optical systems (30) assigned to the optically effective element (24).

2. The light module (10) of claim 1, **characterized in that** the auxiliary exit optical system or all of the auxiliary exit optical systems (30) assigned to one of the optically effective elements (24) deflect beams, which are passing through the auxiliary exit optical systems and are focused by the optically effective element (24), past the secondary optical system (18).

3. The light module (10) of claim 1 or 2, **characterized in that** the optically effective elements (24) each include one optical waveguide with a light input face (34), a light output face (38), and total-reflection side faces (25).

4. The light module (10) of claim 3, **characterized in that** the light input faces (34) of the optical waveguides (24) include a smaller face than the light output faces (38), so that the side faces (25) of the optical waveguides (24), originating at the light input faces (34), diverge from one another obliquely in the direction of the light output faces (38).

5. The light module (10) of claim 3 or 4, **characterized in that** the optical waveguides (24), viewed in longitudinal section, have plane or concavely curved side faces (25).

6. The light module (10) of one of claims 3 through 5, **characterized in that** the side faces (25) have a greater surface roughness than the light output faces (38).

7. The light module (10) of claim 1 or 2, **characterized in that** the optically effective elements (24) each include a reflector.

8. The light module (10) of one of claims 3 through 6, **characterized in that** the exit optical systems (28, 30) are embodied separately from the optical waveguides (24).

9. The light module (10) of one of claims 3 through 6, **characterized in that** the exit optical systems (28, 30) are embodied as an integral component of the optical waveguides (24).

10. The light module (10) of claim 8 or 9, **characterized in that** the optical waveguides (24) and/or the exit optical systems (28, 30) are made from silicone.

11. The light module (10) of one of the foregoing claims, **characterized in that** the secondary optical system (18) includes a projection lens.

12. The light module (10) of one of claims 1 through 10, **characterized in that** the secondary optical system (18) includes an achromatic lens assembly (20, 22).

13. The light module (10) of one of the foregoing claims, **characterized in that** the semiconductor light sources (36) emit light in a visible wavelength range.

14. The light module (10) of one of the foregoing claims, **characterized in that** the light distribution generated by the light module serves to generate a partial high-beam function or a glare-free high-beam function.

15. The light module (10) of one of the foregoing claims, **characterized in that** the light module to an enhanced extent illuminates danger sources identified on the roadway ahead of the motor vehicle.

## Revendications

1. Module d'éclairage (10) pour un dispositif d'éclairage d'un véhicule automobile, avec plusieurs sources de lumière à semi-conducteur (36), agencées comme une matrice, qui émettent un rayonnement électromagnétique, dans lequel dans le chemin optique des sources de lumière à semi-conducteur (36), une optique primaire (14) est agencée, laquelle est configurée comme un agencement optique avec plusieurs éléments actifs optiquement (24) agencés comme une matrice, et qui concentre des rayons émis par les sources de lumière à semi-conducteur (36), dans lequel dans la suite du développement du chemin optique une optique secondaire (18) est agencée, laquelle reproduit les faisceaux concentrés pour l'obtention d'une distribution de lumière souhaitée sur une chaussée devant le véhicule automobile, dans lequel l'optique primaire (14) présente à côté des éléments actifs optiquement (24) dans le chemin optique agencés après ceux-ci en outre des optiques de sortie actifs optiquement (28, 30), **caractérisé en ce que** plusieurs optiques de sortie (28, 30) sont associées à chacun des éléments actifs optiquement (24), à savoir une optique de sortie principale (28) avec des propriétés collectrices sur l'axe optique (39) de l'élément actif optiquement (24) et de manière contiguë à l'optique de sortie principale (28), au moins une optique de sortie accessoire (30), dans lequel une grande partie des faisceaux concentrés par l'un des éléments actifs optiquement (24) passe par l'optique de sortie principale (28) associée à l'élément actif optiquement (24) et les rayons restants concentrés par l'élément actif optiquement (24) passent par une ou plusieurs optiques de sortie accessoires (30) associées à l'élément actif optiquement (24).

2. Module d'éclairage (10) selon la revendication 1, **caractérisé en ce que** la ou toutes les optiques de sortie accessoires (30) associées à un des éléments actifs optiquement (24) dirigent les rayons passant au travers de celles-ci, concentrés par l'élément actif optiquement (24), devant l'optique secondaire (18).

3. Module d'éclairage (10) selon la revendication 1 ou 2, **caractérisé en ce que** les éléments actifs optiquement (24) comportent respectivement un conducteur de lumière avec une surface de couplage de lumière (34) et une surface de découplage de lumière (38) et des surfaces latérales (25) à réflexion totale.

4. Module d'éclairage (10) selon la revendication 3, **caractérisé en ce que** les surfaces de couplage de lumière (34) des conducteurs de lumière (24) comprennent une surface plus petite que les surfaces de découplage de lumière (38) de sorte que les surfaces latérales (25) des conducteurs de lumière (24) divergent l'une de l'autre en biais à partir des surfaces de couplage de lumière (34) en direction des surfaces de découplage de lumière (38).

5. Module d'éclairage (10) selon la revendication 3 ou 4, **caractérisé en ce que** les conducteurs de lumière (24) présentent, vu en coupe longitudinale, des surfaces latérales (25) planes ou courbées de manière concave.

6. Module d'éclairage (10) selon l'une quelconque des revendications 3 à 5, **caractérisé en ce que** les surfaces latérales (25) présentent une rugosité plus grande que les surfaces de découplage de lumière (38).

7. Module d'éclairage (10) selon la revendication 1 ou 2, **caractérisé en ce que** les éléments actifs optiquement (24) comportent respectivement un réflecteur.

8. Module d'éclairage (10) selon l'une quelconque des revendications 3 à 6, **caractérisé en ce que** les optiques de sortie (28, 30) sont réalisées séparément des conducteurs de lumière (24).

9. Module d'éclairage (10) selon l'une quelconque des revendications 3 à 6, **caractérisé en ce que** les optiques de sortie (28, 30) sont réalisées comme partie intégrante des conducteurs de lumière (24).

10. Module d'éclairage (10) selon la revendication 8 ou 9, **caractérisé en ce que** les conducteurs de lumière (24) et/ou les optiques de sortie (28, 30) sont fabriquées en silicone.

11. Module d'éclairage (10) selon l'une quelconque des revendications précédentes, **caractérisé en ce que** l'optique secondaire (18) comporte une lentille de projection.

12. Module d'éclairage (10) selon l'une quelconque des revendications 1 à 10, **caractérisé en ce que** l'optique secondaire (18) comporte un agencement de lentille (20, 22) agissant de manière achromatisante.

13. Module d'éclairage (10) selon l'une quelconque des revendications précédentes, **caractérisé en ce que** les sources de lumière à semi-conducteur (36) émettent de la lumière dans une plage de longueurs d'onde visibles.

14. Module d'éclairage (10) selon l'une quelconque des revendications précédentes, **caractérisé en ce que** la distribution de lumière générée par le module d'éclairage sert à la génération d'une fonction de feu de route partiel ou d'une fonction de feu de route non éblouissante.

15. Module d'éclairage (10) selon l'une quelconque des revendications précédentes, **caractérisé en ce que** le module d'éclairage éclaire de manière renforcée des sources de danger identifiées sur la chaussée devant le véhicule automobile.
